# EUROPÄISCHE PATENTSCHRIFT

(11) **EP 4 559 553 B1**
(45) Veröffentlichungstag und Bekanntmachung des Hinweises auf die Patenterteilung: **20.05.2026**
(21) Anmeldenummer: 24213533.3
(22) Anmeldetag: 18.11.2024
(51) Int. Cl.: B01D 29/15, B01D 35/30

(54) **FILTERSYSTEM FÜR EIN FLUID, INSBESONDERE ÖL ODER KRAFTSTOFF**
FILTER SYSTEM FOR A FLUID, IN PARTICULAR OIL OR FUEL
SYSTÈME DE FILTRATION POUR UN FLUIDE, EN PARTICULIER DU PÉTROLE OU DU CARBURANT

(30) Priorität: 27.11.2023 DE 102023132951
(43) Veröffentlichungstag der Anmeldung: 28.05.2025
(73) Patentinhaber: MANN+HUMMEL GmbH, 71636 Ludwigsburg (DE)
(72) Erfinder: VOGT, Christian, 71636 Ludwigsburg (DE); JOKSCHAS, Günter, 71636 Ludwigsburg (DE)
(74) Vertreter: Mann + Hummel Intellectual Property

(56) Entgegenhaltungen:
- DE-A1- 102005 006 880
- DE-A1- 19 700 564
- US-A- 3 625 363
- US-A1- 2021 138 373

## Beschreibung

### Technisches Gebiet

Die Erfindung betrifft ein Filtersystem für ein Fluid, insbesondere Öl, Kraftstoff oder Kühlflüssigkeit, insbesondere ein Filtersystem für Verbrennungsfahrzeuge oder elektrisch betreibbare Fahrzeuge. Das Filtersystem kann Teil der E-Achse eines Hybrid- oder Elektrofahrzeugs sein.

### Stand der Technik

Die DE 197 00 564 A1 offenbart ein Filtersystem, insbesondere für das Schmieröl einer Brennkraftmaschine, bestehend aus einem topfförmigen Filtergehäuse, einem im Filtergehäuse angeordneten Stützrohr und einem auf dem Stützrohr befestigten Filterelement, welches im Wesentlichen aus einem zick-zack-förmig gefalteten Filtermittel besteht. Dabei nimmt das Filtergehäuse unmittelbar eine Dichtung zum Abdichten zwischen Gehäuse und Flansch auf. Das Stützrohr ist mit einem Anschraubgewinde versehen und über eine Schraubverbindung mit dem Flansch befestigbar.

Aus der DE 10 2005 006 880 A1 ist ein entsorgbarer Aufschraubfilter ist zur Anbringung an einer Basis aufgebaut und ausgelegt, welche einen Befestigungsschaft mit einem Gewinde aufweist. Die Basis schafft einen Fluideinlassfluss in dem Filter und einen Fluidaustrittspfad aus dem Filter. Der Filteraufbau umfasst einen Gehäusetopf mit einem geschlossenen Ende und einem gegenüberliegenden offenen Ende und ein Fluidfiltermedium, welches innerhalb des Gehäusetopfes angeordnet ist.

Die US 2021/138373 A1 zeigt eine Spin-On-Filterbaugruppe mit austauschbarem kernlosem Element. Es ist ein wiederverwendbares Spin-On-Gehäuse mit einer Filterwanne offenbart, die eine Dichtungsstruktur am Boden der Filterwanne und eine Dichtungsstruktur am oberen Ende der Filterwanne aufweist; ein mit der Filterwanne integral ausgebildetes, zentrales Stützrohr, das ein perforiertes Rohr und einen oberen Abschnitt mit einer Gewindekupplung umfasst, die es ermöglicht, die Filterbaugruppe in Position zu schrauben, sowie eine äußere Dichtungsstruktur.

Der US 3 625 363 A ist ein aufschraubbarer Ölfilter für einen Verbrennungsmotor zu entnehmen, der ein Gehäuse und einen abnehmbaren Deckel umfasst, der den Austausch eines geblockten Filterelements ermöglicht. Das Gehäuse verfügt über eine integrierte Spindel, deren freies Ende auf eine Ölauffangleitung des Motors geschraubt wird, wodurch der Deckel am Gehäuse festgeklemmt wird.

In der DE 10 2015 114 320 A1 ist ein Fluidfilter mit einem Gehäuse mit einem Fluidzulauf und einem Fluidablauf beschrieben, mit einem den Fluidablauf bildenden zentralen Stützrohr, mit einem auf das Stützrohr aufgesteckten Filtereinsatz und mit einer Ventileinheit. Das Stützrohr weist an seinen axialen Endbereichen jeweils ein Schraubgewinde zur Verbindung einerseits mit dem Gehäuse und andererseits mit einem Filteranschlussflansch auf. Weiter weist das Stützrohr in seinem dazwischen liegenden Bereich eine Durchlassöffnung auf. Das Stützrohr weist in seinem zwischen den axialen Endbereichen liegenden Bereich auf dem Außenumfang Führungselemente für wenigstens einen Ventilkörper der Ventileinheit und/oder Führungs- und Halteelemente für eine Ventilfederstütze der Ventileinheit auf.

### Offenbarung der Erfindung

Eine Aufgabe der Erfindung ist es, ein einfach zu fertigendes und kostengünstiges Filtersystem für ein Fluid, insbesondere Öl oder Kraftstoff, zu schaffen.

Die vorgenannte Aufgabe wird nach einem Aspekt der Erfindung gelöst mit einem Filtersystem für ein Fluid, insbesondere Öl oder Kraftstoff, wenigstens umfassend ein topfförmiges Filtergehäuse mit einem entlang einer Längsachse ausgerichteten gehäusefesten Stützrohr und einem um das Stützrohr angeordneten Filterelement, wobei das Stützrohr als Fluiddurchlass, insbesondere Fluidauslass, ausgebildet ist, wobei ein offenes Ende des Filtergehäuses einen Fluiddurchlass, insbesondere Fluideinlass, umfasst und ein umlaufendes Dichtelement bei bestimmungsgemäßer Montage zum Abdichten gegen einen Anschlussflansch aufweist, wobei das Stützrohr an seinem dem Filtergehäuse abgewandten freien Ende ein Schraubgewinde für eine Schraubverbindung mit dem Anschlussflansch und entlang einer Längserstreckung des Stützrohrs wenigstens eine Durchlassöffnung für, insbesondere gefiltertes, Fluid aufweist. Das Stützrohr ist mit dem Filtergehäuse einstückig ausgebildet.

Günstige Ausgestaltungen und Vorteile der Erfindung ergeben sich aus den weiteren Ansprüchen, der Beschreibung und der Zeichnung.

Die Erfindung geht aus von einem Filtersystem für ein Fluid, insbesondere Öl oder Kraftstoff, wenigstens umfassend ein topfförmiges Filtergehäuse mit einem entlang einer Längsachse ausgerichteten gehäusefesten Stützrohr und einem um das Stützrohr angeordneten Filterelement, wobei das Stützrohr als Fluiddurchlass, insbesondere Fluidauslass, ausgebildet ist. Ein offenes Ende des Filtergehäuses umfasst einen Fluiddurchlass, insbesondere Fluideinlass, und ein umlaufendes Dichtelement bei bestimmungsgemäßer Montage zum Abdichten gegen einen Anschlussflansch. Das Stützrohr weist an seinem dem Filtergehäuse abgewandten freien Ende ein Schraubgewinde für eine Schraubverbindung mit dem Anschlussflansch auf, wobei das Schraubgewinde in das Material des Stützrohrs eingebracht sein kann oder von einem separaten Bauteil getragen werden kann, welches fest, insbesondere unlösbar, mit dem Stützrohr verbunden ist. Entlang einer Längserstreckung des Stützrohrs weist das Stützrohr wenigstens eine Durchlassöffnung für Fluid, insbesondere gefiltertes Fluid, auf.

Erfindungsgemäß ist das Stützrohr mit dem Filtergehäuse einstückig ausgebildet. Hierbei sind das Schraubgewinde und das Stützrohr nicht zwingend einstückig. Bevorzugt sind Filtergehäuse und Stützrohr als einstückiges Kunststoffspritzgussteil ausgebildet. Das Schraubgewinde am Stützrohr ist vorteilhaft metallisch und fest mit dem Stützrohr verbunden. Hierzu kann das Schraubgewinde beispielsweise als Gewindebuchse in Form eines Einlegeteils ausgebildet sein und beim Spritzgussprozess in das Material des Stützrohrs eingebettet werden. Das gewindetragende Bauteil kann auch nach der Herstellung des Filtergehäuses mit Stützrohr mit letzterem verbunden werden.

Das vorgeschlagene Filtersystem weist ein als Filterkappe ausgebildetes Filtergehäuse auf, welches vorteilhaft einstückig aus Kunststoff ausgebildet sein kann, mit einer axialen Dichtung.

Das Filtergehäuse umfasst eine zentrale Gewindestange, die auch gleichzeitig als Stützrohr für das Filterelement dient und die Dichtstellen für das Filterelement beinhaltet.

Das Filtersystem umfasst weiter ein Filterelement. Mit dem Filtergehäuse kann auf diese Weise ein Wechselfilterflansch günstigerweise dicht verschlossen werden.

Das Stützrohr besteht aus dem gleichen Material wie das restliche Filtergehäuse und wird günstigerweise einteilig mit der Filterkappe hergestellt. Das Filtergehäuse weist ein axiales Dichtprinzip auf und wird wie ein Wechselfilter an einen Anschlussflansch angeschraubt. Als Dichtelement kann vorteilhaft eine axiale Formdichtung statt einer schlauchgestochenen Axialdichtung eingesetzt werden, um die Reaktionskräfte der Dichtung so gering wie möglich zu halten.

Wenn das Filtergehäuse aus Kunststoff ausgebildet ist, weist es günstigerweise eine hohe Korrosionsbeständigkeit auf. Das Filtersystem umfasst wenige Teile wie Filtergehäuse, Axialdichtung, Filterelement und ist auf einfache Weise montierbar. Es sind keine Schweiß- oder Fügeprozesse nötig. Dadurch ist das Filtersystem kostengünstig zu fertigen.

Gemäß einer günstigen Ausgestaltung des Filtersystems kann das Filterelement einen an Stirnseiten mit Endscheiben abgeschlossenen Filtermediumkörper aufweisen, wobei wenigstens eine der Endscheiben für eine radiale Abdichtung gegen das Stützrohr ausgebildet ist. Vorteilhaft können auch beide Endscheiben gegen das Stützrohr radial abdichten. Dadurch kann eine Reinseite des Filtersystems auf einfache Weise von der Rohseite getrennt werden.

Erfindungsgemäß verläuft die wenigstens eine Durchlassöffnung schräg zur Längsachse in Richtung des offenen Endes des Filtergehäuses. Auf diese Weise kann das Filtergehäuse mit Stützrohr vorteilhaft in einem Spritzgussprozess als ein Teil hergestellt und entformt werden. Weiterhin wirken sich schräg zur Längsachse verlaufende Durchlassöffnungen positiv auf das Strömungsverhalten aus.

Gemäß einer günstigen Ausgestaltung des Filtersystems kann das Dichtelement für eine axiale Abdichtung gegen den Anschlussflansch ausgebildet sein. Dadurch kann das Filtersystem zweckmäßigerweise auf den Anschlussflansch aufgeschraubt werden und dichtet damit auf einfache Weise gegen den mit einer ebenen Dichtfläche versehenen Anschlussflansch ab.

Gemäß einer günstigen Ausgestaltung des Filtersystems kann das Dichtelement als Formdichtung ausgebildet sein, welches in einer umlaufenden Nut des Filtergehäuses angeordnet ist. Das Dichtelement kann vorteilhaft die Nut des Filtergehäuses komplett ausfüllen und damit eine dauerhafte und robuste Abdichtung des Filtersystems gegen den Anschlussflansch bewirken.

Gemäß einer günstigen Ausgestaltung des Filtersystems kann das Filtergehäuse an seinem geschlossenen Ende radiale Versteifungsrippen aufweisen. Auf diese Weise kann das Filtergehäuse, das aus Kunststoff ausgebildet sein kann und demzufolge weniger steif ausgebildet sein kann als ein Metallgehäuse, gegen den Fluiddruck versteift werden, um die Form, insbesondere auch bei höheren Temperaturen zu halten. Dabei können günstigerweise Fluiddrücke auf maximal 25 bar begrenzt sein. Fluidtemperaturen können typischerweise im Bereich -40° C bis 150° C liegen.

Gemäß einer günstigen Ausgestaltung des Filtersystems kann das Filtergehäuse an seinem geschlossenen Ende eine in axialer Richtung nach außen offene Werkzeugaufnahme, insbesondere für ein Schraubwerkzeug, aufweisen. Gemäß einer weiteren Ausgestaltung hat das Filtergehäuse eine Werkzeugaufnahme an dem äußeren radialen Ende, welche das Befestigen und Lösen des Filtergehäuses erleichtert. Damit kann eine zuverlässige Abdichtung beim Verschrauben des Filtergehäuses mit dem Anschlussflansch erreicht werden. Auch kann ein festsitzendes Filtergehäuse mittels des Werkzeugs von dem Anschlussflansch gelöst werden.

Gemäß einer günstigen Ausgestaltung des Filtersystems kann das Filterelement austauschbar um das Stützrohr angeordnet sein. Auf diese Weise kann das Filterelement durch Abziehen vom Stützrohr einfach gewechselt werden.

Gemäß einer günstigen Ausgestaltung des Filtersystems kann das Filtergehäuse aus Kunststoff ausgebildet sein. Insbesondere kann dabei das Filtergehäuse als Kunststoff-Spritzgussteil ausgebildet sein. Kunststoffgehäuse sind einfach und kostengünstig zu fertigen und können eine große Beständigkeit gegenüber Umwelteinflüssen aufweisen. Außerdem weisen Kunststoffgehäuse ein geringes Gewicht auf.

Gemäß einer günstigen Ausgestaltung des Filtersystems kann das Filtergehäuse konusförmig mit zum offenen Ende hin größerem Innendurchmesser ausgebildet sein. Eine solche Formgebung ist von Vorteil zum Entformen bei einem Kunststoff-Spritzguss-Prozess zur Herstellung des Filtergehäuses.

In einer alternativen Ausführungsform ist auch möglich, dass das Filtergehäuse als Metallgehäuse hergestellt wird. Insbesondere kann dabei das Filtergehäuse als Druckgussteil, insbesondere als Aluminium-Druckgussteil, ausgebildet sein. Das Schraubgewinde kann in diesem Fall direkt in den Endbereich des Stützrohres eingebracht sein, sodass kein gewindetragendes separates Bauteil erforderlich ist. Auch mit dieser Ausführungsform können günstige Fertigungskosten bei hoher Beständigkeit des Filtergehäuses erreicht werden.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:
- Figur 1: einen Längsschnitt eines an einem Anschlussflansch montierten Filtersystems für ein Fluid, insbesondere Öl oder Kraftstoff, nach einem Ausführungsbeispiel der Erfindung;
- Figur 2: eine isometrische geschnittene Ansicht des Filtersystems nach Fig. 1; und
- Figur 3: eine Explosionsdarstellung des Filtersystems mit dem Anschlussflansch nach Fig. 1.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

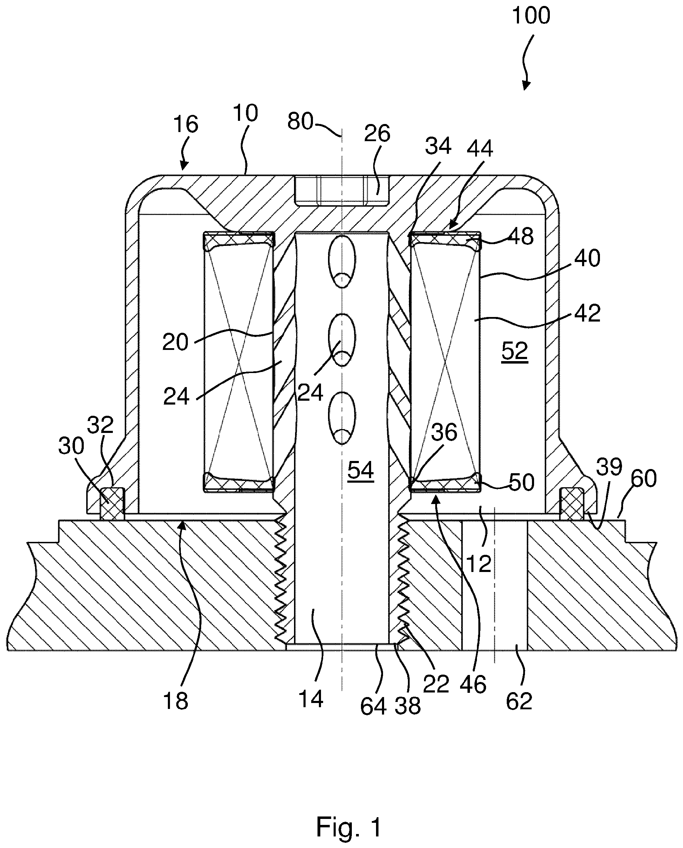

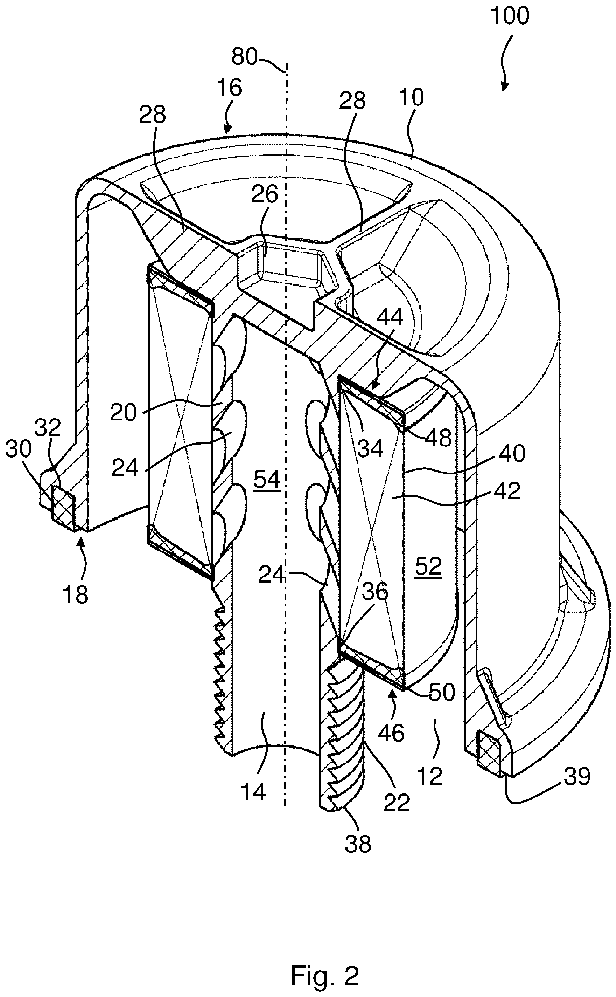

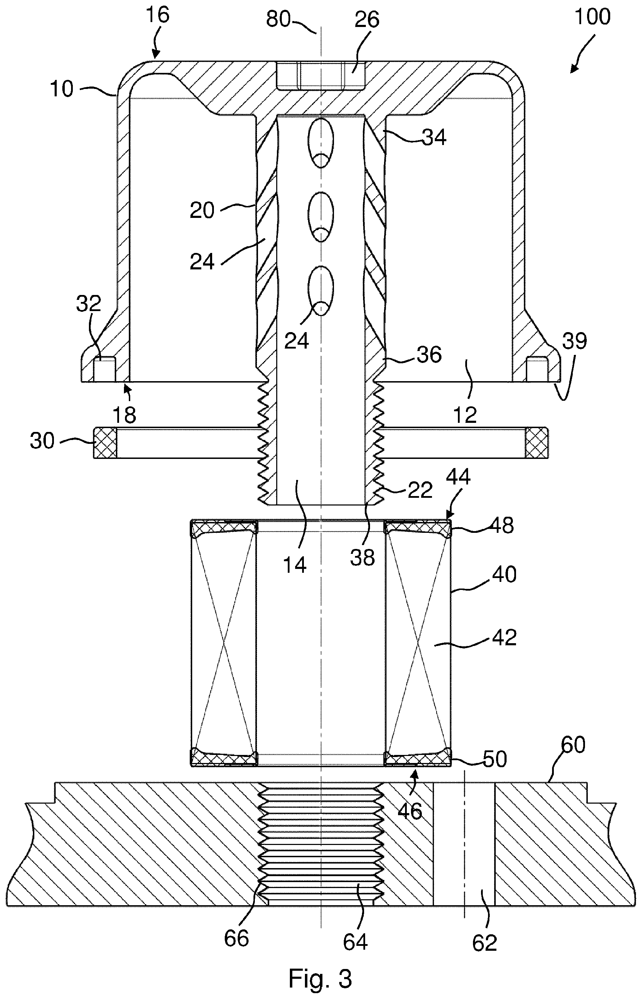

Figur 1 zeigt einen Längsschnitt eines an einem Anschlussflansch 60 montierten Filtersystems 100 für ein Fluid, insbesondere Öl oder Kraftstoff, nach einem Ausführungsbeispiel der Erfindung. Figur 2 zeigt eine isometrische geschnittene Ansicht des Filtersystems 100, während in Figur 3 eine Explosionsdarstellung des Filtersystems 100 dargestellt ist.

Das Filtersystem 100 kann beispielsweise als Öl- oder Kraftstofffilter in einem Verbrennungsfahrzeug oder einem elektrisch betriebenen Fahrzeug eingesetzt werden.

Das Filtersystem 100 umfasst ein topfförmiges Filtergehäuse 10 mit einem entlang einer Längsachse 80 ausgerichteten gehäusefesten Stützrohr 20 und einem um das Stützrohr 20 angeordneten Filterelement 40. Das Filterelement 40 kann auf das Stützrohr 20 aufgeschoben werden und ist auf diese Weise austauschbar.

Das Stützrohr 20 ist als Fluiddurchlass, insbesondere als Fluidauslass 14, ausgebildet. Ein offenes Ende 18 des Filtergehäuses 10 umfasst ebenfalls einen Fluiddurchlass, insbesondere einen Fluideinlass 12, und ein umlaufendes in einer umlaufenden Nut 32 angeordnetes Dichtelement 30.

Das Stützrohr 20 weist an seinem dem Filtergehäuse 10 abgewandten freien Ende 38 ein Schraubgewinde 22 für eine Schraubverbindung mit dem Anschlussflansch 60 auf. Weiter weist das Stützrohr 20 entlang einer Längserstreckung des Stützrohrs 20 eine Vielzahl von Durchlassöffnungen 24 für, insbesondere gefiltertes, Fluid auf. Das Stützrohr 20 ist mit dem Filtergehäuse 10 einstückig ausgebildet. Das Schraubgewinde 22 muss nicht zwingend einteilig mit dem Stützrohr 20 ausgebildet sein. Insbesondere für den Fall, dass das Stützrohr 20 aus Kunststoff gefertigt ist, wird das Schraubgewinde 22 von einem separaten Bauteil getragen, welches fest, insbesondere unlösbar, mit dem Stützrohr 20 verbunden ist.

Das Filterelement 40 weist einen an Stirnseiten 44, 46 mit Endscheiben 48, 50 abgeschlossenen Filtermediumkörper 42 auf. Die Endscheiben 48, 50 sind dabei für eine radiale Abdichtung gegen das Stützrohr 20 ausgebildet. Bei bestimmungsgemäßer Montage des Filterelements 40 auf dem Stützrohr 20 liegen die Endscheiben 48, 50 an korrespondierenden Dichtflächen 34, 36 des Stützrohrs 20 an und dichten so das Filterelement 40 gegen das Stützrohr 20 ab.

Das Filtersystem 100 ist mit dem Gewinde 22 des Stützrohrs 20 in ein Gegengewinde 66 einer beispielsweise als Fluidabfluss ausgebildeten Öffnung 64 des Anschlussflansches 60 eingeschraubt. Das umlaufende Dichtelement 30 wird auf die Anschlussfläche des Anschlussflansches 60 gepresst und dichtet so das Filtergehäuse 10 nach außen ab. Dabei liegt die Stirnfläche 39 des Filtergehäuses 10 auf der Anschlussfläche des Anschlussflansches 60 auf.

Das Dichtelement 30 ist so für eine axiale Abdichtung gegen den Anschlussflansch 60 ausgebildet und kann beispielsweise eine Formdichtung sein, welche in der umlaufenden Nut 32 des Filtergehäuses 10 angeordnet ist.

Der Anschlussflansch 60 weist weiter eine als Fluidzufluss ausgebildete Öffnung 62 auf, welche bei aufgeschraubtem Filtersystem 100 mit dem Fluideinlass 12 des Filtersystems 100 fluidisch verbunden ist. Das zu filternde Fluid fließt durch den Fluidzufluss 62 in den Rohfluidbereich 52 und tritt durch den Filtermediumkörper 42 des Filterelements 40 hindurch. Das gefilterte Fluid strömt durch die Durchlassöffnungen 24 des Stützrohrs 20 in den Reinfluidbereich 54 im Inneren des Stützrohrs 20 und tritt durch den Fluidauslass 14 in den Fluidabfluss 64 des Anschlussflansches 60 wieder aus.

Die Durchlassöffnungen 24 verlaufen schräg zur Längsachse 80 in Richtung des offenen Endes 18 des Filtergehäuses 10, damit das einstückig mit dem Stützrohr 20 ausgebildete Kunststoffgehäuse 10 bei einem Spritzguss-Prozess günstig entformt werden kann. Dazu kann das Filtergehäuse 10 günstigerweise auch konusförmig mit zum offenen Ende 18 hin größerem Innendurchmesser ausgebildet sein, was einen Vorteil zum Entformen bei dem Kunststoff-Spritzguss-Prozess darstellt.

Alternativ ist jedoch auch möglich, dass das Filtergehäuse 10 aus Metall, insbesondere als Druckgussteil, insbesondere als Aluminium-Druckgussteil, ausgebildet ist.

In der isometrischen geschnittenen Ansicht des Filtersystems 100 in Figur 2 ist zu erkennen, dass das Filtergehäuse 10 an seinem geschlossenen Ende 16 radiale Versteifungsrippen 28 aufweist. Auf diese Weise kann das Filtergehäuse 10, vor allem ein aus Kunststoff gefertigtes Filtergehäuse 10, gegen einen höheren Fluiddruck versteift werden, um seine Form, insbesondere auch bei höheren Temperaturen zu halten.

Auch ist zu erkennen, dass das Filtergehäuse 10 an seinem geschlossenen Ende 16 eine in axialer Richtung 80 nach außen offene Werkzeugaufnahme 26, insbesondere für ein Schraubwerkzeug, aufweist. Damit kann eine zuverlässige Abdichtung beim Verschrauben des Filtergehäuses 10 mit dem Anschlussflansch 60 erreicht werden. Auch kann ein festsitzendes Filtergehäuse 10 mittels des Werkzeugs von dem Anschlussflansch 60 gelöst werden.

In der Explosionsdarstellung in Figur 3 ist die Reihenfolge der Montage der wenigen Komponenten des Filtersystems 100 zu erkennen.

Das Filtergehäuse 10 umfasst das mit dem Filtergehäuse 10 einstückig ausgebildete Stützrohr 20. Das Filterelement 40 kann auf einfache Weise auf das Stützrohr 20 aufgeschoben werden und dichtet dann mit seinen Endscheiben 48, 50 an den Dichtfläche 34, 36 gegen das Stützrohr 20 ab. Die Formdichtung 30 wird in die umlaufende Nut 32 am offenen Ende 18 des Filtergehäuses 10 eingelegt und dichtet so bei auf den Anschlussflansch 60 am Gegengewinde 66 der Öffnung 64 aufgeschraubtem Filtersystem 100 gegen den Anschlussflansch 60 ab.

### Bezugszeichen

- 10: Filtergehäuse
- 12: Fluideinlass
- 14: Fluidauslass
- 16: geschlossenes Ende
- 18: offenes Ende
- 20: Stützrohr
- 22: Schraubgewinde
- 24: Durchlassöffnung
- 26: Schraubkontur
- 28: Versteifungsrippe
- 30: Dichtelement
- 32: Nut
- 34: Dichtfläche
- 36: Dichtfläche
- 38: Ende
- 39: Stirnfläche
- 40: Filterelement
- 42: Filtermediumkörper
- 44: Stirnseite
- 46: Stirnseite
- 48: Endscheibe
- 50: Endscheibe
- 52: Rohfluidbereich
- 54: Reinfluidbereich
- 60: Anschlussflansch
- 62: Fluidzufluss
- 64: Fluidabfluss
- 66: Gegengewinde
- 80: Längsachse
- 100: Filtersystem

## Patentansprüche

1. Filtersystem (100) für ein Fluid, insbesondere Öl, Kraftstoff oder Kühlflüssigkeit, wenigstens umfassend ein topfförmiges Filtergehäuse (10) mit einem entlang einer Längsachse (80) ausgerichteten gehäusefesten Stützrohr (20) und einem um das Stützrohr (20) angeordneten Filterelement (40),
wobei das Stützrohr (20) als Fluiddurchlass, insbesondere Fluidauslass (14), ausgebildet ist,
wobei ein offenes Ende (18) des Filtergehäuses (10) einen Fluiddurchlass, insbesondere Fluideinlass (12), umfasst und ein umlaufendes Dichtelement (30) bei bestimmungsgemäßer Montage zum Abdichten gegen einen Anschlussflansch (60) aufweist,
wobei das Stützrohr (20) an seinem dem Filtergehäuse (10) abgewandten freien Ende (38) ein Schraubgewinde (22) für eine Schraubverbindung mit dem Anschlussflansch (60) und entlang einer Längserstreckung des Stützrohrs (20) wenigstens eine Durchlassöffnung (24) für, insbesondere gefiltertes, Fluid aufweist,
**dadurch gekennzeichnet, dass**
das Stützrohr (20) mit dem Filtergehäuse (10) einstückig ausgebildet ist, wobei die wenigstens eine Durchlassöffnung (24) schräg zur Längsachse (80) in Richtung des offenen Endes (18) des Filtergehäuses (10) verläuft.

2. Filtersystem nach Anspruch 1, wobei das Filterelement (40) einen an Stirnseiten (44, 46) mit Endscheiben (48, 50) abgeschlossenen Filtermediumkörper (42) aufweist, wobei wenigstens eine der Endscheiben (48, 50) für eine radiale Abdichtung gegen das Stützrohr (20) ausgebildet ist.

3. Filtersystem nach einem der vorhergehenden Ansprüche, wobei das Dichtelement (30) für eine axiale Abdichtung gegen den Anschlussflansch (60) ausgebildet ist.

4. Filtersystem nach einem der vorhergehenden Ansprüche, wobei das Dichtelement (30) als Formdichtung ausgebildet ist, welches in einer umlaufenden Nut (32) des Filtergehäuses (10) angeordnet ist.

5. Filtersystem nach einem der vorhergehenden Ansprüche, wobei das Filtergehäuse (10) an seinem geschlossenen Ende (16) eine in axialer Richtung (80) nach außen offene Werkzeugaufnahme (26), insbesondere für ein Schraubwerkzeug, aufweist.

6. Filtersystem, nach einem der Ansprüche 1 bis 4, wobei das Filtergehäuse (10) an seinem geschlossenen Ende (16) eine in radiale Richtung nach außen offene Werkzeugaufnahme, insbesondere für einen Wechselfilterlöseschlüssel, aufweist.

7. Filtersystem nach einem der vorhergehenden Ansprüche, wobei das Filterelement (40) austauschbar um das Stützrohr (20) angeordnet ist.

8. Filtersystem nach einem der vorhergehenden Ansprüche, wobei das Filtergehäuse (10) aus Kunststoff ausgebildet ist, insbesondere wobei das Filtergehäuse (10) als Kunststoff-Spritzgussteil ausgebildet ist.

9. Filtersystem nach Anspruch 8, wobei das Filtergehäuse (10) konusförmig mit zum offenen Ende (18) hin größerem Innendurchmesser ausgebildet ist.

10. Filtersystem nach Anspruch 8 oder 9, wobei das Filtergehäuse (10) an seinem geschlossenen Ende (16) radiale Versteifungsrippen (28) aufweist.

11. Filtersystem nach einem der Ansprüche 1 bis 7, wobei das Filtergehäuse (10) aus Metall ausgebildet ist, insbesondere wobei das Filtergehäuse (10) als Druckgussteil, insbesondere als Aluminium-Druckgussteil, ausgebildet ist.

## Claims

1. A filter system (100) for a fluid, in particular oil, fuel, or cooling liquid, comprising at least a pot-shaped filter housing (10) with a support tube (20) firmly attached to the housing and aligned along a longitudinal axis (80), and a filter element (40) arranged around the support tube (20),
wherein the support tube (20) is configured as a fluid passage, in particular a fluid outlet (14),
wherein an open end (18) of the filter housing (10) comprises a fluid passage, in particular a fluid inlet (12), and features a circumferential sealing element (30) for sealing against a connecting flange (60) when assembled in accordance with the intended use,
wherein the support tube (20) features, at its free end (38) facing away from the filter housing (10), a screw thread (22) for a screwed connection with the connecting flange (60) and, along a longitudinal extension of the support tube (20), at least one passage opening (24) for, in particular, filtered fluid,
**characterized in that**
the support tube (20) is formed integrally with the filter housing (10), wherein the at least one passage opening (24) extends obliquely to the longitudinal axis (80) in the direction of the open end (18) of the filter housing (10).

2. The filter system according to claim 1, wherein the filter element (40) features a filter medium body (42) closed at front faces (44, 46) by end discs (48, 50), wherein at least one of the end discs (48, 50) is configured to provide a radial seal against the support tube (20).

3. The filter system according to one of the preceding claims, wherein the sealing element (30) is configured to provide an axial seal against the connecting flange (60).

4. The filter system according to one of the preceding claims, wherein the sealing element (30) is designed as a molded sealing, which is disposed in a circumferential groove (32) of the filter housing (10).

5. The filter system according to one of the preceding claims, wherein the filter housing (10) features, at its closed end (16), a tool-holding fixture (26) open outward in the axial direction (80), in particular for assembly tools for screws and nuts.

6. The filter system according to one of the claims 1 to 4, wherein the filter housing (10) features, at its closed end (16), a tool-holding fixture open outward in the radial direction, in particular for an oil filter wrench.

7. The filter system according to one of the preceding claims, wherein the filter element (40) is arranged in a replaceable manner around the support tube (20).

8. The filter system according to one of the preceding claims, wherein the filter housing (10) is made of plastic material, in particular wherein the filter housing (10) is formed as a plastic injection-molded part.

9. The filter system according to claim 8, wherein the filter housing (10) has a conical shape with an inner diameter that increases toward the open end (18).

10. The filter system according to claim 8 or 9, wherein the filter housing (10) features radial reinforcing ribs (28) at its closed end (16).

11. The filter system according to claim 1 to 7, wherein the filter housing (10) is made of metal, in particular wherein the filter housing (10) is formed as a die-cast part, in particular as an aluminum die-cast part.

## Revendications

1. Système de filtre (100) pour un fluide, en particulier de l'huile, du carburant ou un liquide de refroidissement, comprenant au moins un boîtier de filtre (10) en forme de pot avec un tube de support (20) solidaire du boîtier et orienté le long d'un axe longitudinal (80), et un élément de filtre (40) disposé autour du tube de support (20),
le tube de support (20) étant conçu comme un passage de fluide, en particulier une sortie de fluide (14),
une extrémité ouverte (18) du boîtier de filtre (10) comprenant un passage de fluide, en particulier une entrée de fluide (12), et présentant un élément d'étanchéité périphérique (30) destiné, lors d'un montage conformément à l'utilisation prévue, à assurer l'étanchéité par rapport à une bride de raccordement (60),
le tube de support (20) présentant, à son extrémité libre (38) opposée au boîtier de filtre (10), un filetage intérieur (22) pour un assemblage par vis avec la bride de raccordement (60) et, le long d'une extension longitudinale du tube de support (20), au moins une ouverture de passage (24) pour un fluide, en particulier filtré,
**caractérisé en ce que**
le tube de support (20) est formé d'un seul tenant avec le boîtier de filtre (10), l'ouverture de passage (24), au moins au nombre d'une, s'étendant obliquement par rapport à l'axe longitudinal (80) en direction de l'extrémité ouverte (18) du boîtier de filtre (10).

2. Système de filtre selon la revendication 1, dans lequel l'élément de filtre (40) présente un corps de milieu filtrant (42) fermé aux faces frontales (44, 46) par des disques d'extrémité (48, 50), au moins l'un des disques d'extrémité (48, 50) étant conçu pour assurer une étanchéité radiale contre le tube de support (20).

3. Système de filtre selon l'une quelconque des revendications précédentes, dans lequel l'élément d'étanchéité (30) est conçu pour assurer une étanchéité axiale par rapport à la bride de raccordement (60).

4. Système de filtre selon l'une quelconque des revendications précédentes, dans lequel l'élément d'étanchéité (30) est conçu comme un joint moulé disposé dans une rainure périphérique (32) du boîtier de filtre (10).

5. Système de filtre selon l'une quelconque des revendications précédentes, dans lequel le boîtier de filtre (10) présente, à son extrémité fermée (16), un porte-outil (26) ouvert vers l'extérieur dans la direction axiale (80), en particulier pour un outil de vissage.

6. Système de filtre selon l'une quelconque des revendications 1 à 4, dans lequel le boîtier de filtre (10) présente, à son extrémité fermée (16), un porte-outil ouvert vers l'extérieur dans la direction radiale, en particulier pour une clé de déverrouillage du filtre de remplacement.

7. Système de filtre selon l'une quelconque des revendications précédentes, dans lequel l'élément de filtre (40) est disposé de manière interchangeable autour du tube de support (20).

8. Système de filtre selon l'une quelconque des revendications précédentes, dans lequel le boîtier de filtre (10) est réalisé en matière plastique, en particulier dans lequel le boîtier de filtre (10) est réalisé sous forme de pièce moulée par injection en matière plastique.

9. Système de filtre selon la revendication 8, dans lequel le boîtier de filtre (10) est de forme conique avec un diamètre intérieur croissant vers l'extrémité ouverte (18).

10. Système de filtre selon la revendication 8 ou 9, dans lequel le boîtier de filtre (10) présente, à son extrémité fermée (16), des nervures de renfort radiales (28).

11. Système de filtre selon l'une quelconque des revendications 1 à 7, dans lequel le boîtier de filtre (10) est réalisé en métal, en particulier dans lequel le boîtier de filtre (10) est réalisé sous forme de pièce moulée sous pression, en particulier de pièce moulée sous pression en aluminium.
